# EUROPÄISCHE PATENTANMELDUNG

(11) **EP 2 744 079 A2**
(43) Veröffentlichungstag der Anmeldung: **18.06.2014**
(21) Anmeldenummer: 13196030.4
(22) Anmeldetag: 06.12.2013
(51) Int. Cl.: H02K 1/28

(54) **Rotor sowie Elektromotor**

(30) Priorität: 13.12.2012 DE 102012112228
(71) Anmelder: Hanning Elektro-Werke GmbH & Co. KG, 33813 Oerlinghausen (DE)
(72) Erfinder: Hangmann, Werner, 33758 Schloß Holte-Stukenbrock (DE)
(74) Vertreter: Ostermann, Thomas

(57) **Zusammenfassung**

Die Erfindung betrifft einen Rotor für einen Elektromotor, insbesondere für Synchronmotoren von Nassläuferpumpen, mit einem Rotorkern, an dem umfangsseitig eine Anzahl von Magneten angebracht sind, wobei der Rotorkern und die Magnete von einer Kunststoffummantelung umgeben sind, wobei die Magnete jeweils auf einer dem Rotorkern abgewandten äußeren Umfangsseite eine Aufnahmenut aufweisen.

## Beschreibung

Die Erfindung betrifft einen Rotor für einen Elektromotor, insbesondere für Synchronmotoren von Nassläuferpumpen, mit einem Rotorkern, an dem umfangsseitig eine Anzahl von Magneten angebracht sind, wobei der Rotorkern und die Magnete von einer Kunststoffummantelung umgeben sind.

Aus der EP 1 841 041 A1 ist ein Rotor für einen Elektromotor bekannt, der einen Rotorkern und eine Anzahl von umfangsseitig des Rotorkerns angebrachte Magneten aufweist. Der Rotorkern weist zum einen ein Blechpaket auf. Zum anderen weist der Rotorkern eine umfangsseitige Kunststoffumspritzung auf, in der Magnettaschen zur Aufnahme der Magnete ausgebildet sind. Nach Einsetzen der Magneten in die Magnettaschen erfolgt eine umfangsseitige Kunststoffummantelung des so erweiterten Rotorkerns, so dass der Rotor vor dem Eindringen von korrosionsfördernder Feuchtigkeit geschützt ist. Nachteilig an dem bekannten Rotor ist jedoch, dass die Kunststoffummantelung eine relativ große radiale Erstreckung aufweist, so dass sich ein vergrößerter "magnetischer Spalt" zu dem Stator einstellt, was die Performance des Elektromotors begrenzt.

Aufgabe der vorliegenden Erfindung ist es daher, einen Rotor bzw. einen Elektromotor derart weiterzubilden, dass auf einfache Weise ein Korrosionsschutz des Rotors bei verbesserten Leistungseigenschaften desselben gewährleistet ist.

Zur Lösung der Aufgabe ist die Erfindung in Verbindung mit dem Oberbegriff des Patentanspruchs 1 dadurch gekennzeichnet, dass die Magnete jeweils auf einer dem Rotorkern abgewandten äußeren Umfangsseite eine Aufnahmenut aufweisen.

Der besondere Vorteil der Erfindung besteht darin, dass eine den Rotorkern und die Magneten umhüllende Kunststoffummantelung eine relativ geringe Wandstärke aufweisen kann, so dass ein Radialabstand (magnetischer Spalt) zwischen dem Rotor und einem Stator des Elektromotors verlustarm klein gewählt werden kann. Eine radiale Mindestdicke der Kunststoffummantelung, die zum Ausgleich von auf den Magneten im Betrieb des Elektromotors wirkenden Fliehkräfte vorhanden sein muss, kann kleiner gewählt werden, weil durch die Ausbildung einer Aufnahmenut an einer äußeren Umfangsseite der Magneten eine partielle Wandstärkenerhöhung der Kunststoffummantelung eintritt. Diese partielle Wandstärkenerhöhung der Kunststoffummantelung führt zu einer lokalen Versteifung der Kunststoffummantelung. Diese wirkt quasi als ein "Sicherheitsgurt" für die Magnete, der eine erhöhte, radial nach innen gerichtete Haltekraft auf die Magnete ermöglicht. Eine vorgegebene Motorleistung kann somit unter Einsatz von weniger Metallmaterial für den Rotor bzw. den Stator erbracht werden, was den Kosten- bzw. Materialaufwand verringert. Auf fertigungstechnisch einfache Weise kann die partielle Wandstärkenerhöhung in einem gemeinsamen Verfahrensschritt mit der Kunststoffumspritzung bzw. Kunststoffummantelung des Rotorkerns erfolgen. Wenn die Anspritzdüsen des Umspritzwerkzeuges auf die Aufnahmenuten der Magneten ausgerichtet sind, kann zudem die Prozesssicherheit des Umspritzvorganges erhöht werden. Der erhöhte Freiraum innerhalb des Umspritzwerkzeuges im Bereich der Aufnahmenuten kann als Strömungskanal für die Kunststoffmasse dienen und vereinfacht insofern die Befüllung des freien Formraums innerhalb des Werkzeugs. Aufgrund des relativ geringen Fließwiderstandes entlang der Aufnahmenut wird sich der Hauptstrom der Kunststoffmasse entlang dieser Aufnahmenut bewegen und von hier den gesamten Freiraum des Formwerkzeuges füllen.

Nach einer bevorzugten Ausführungsform der Erfindung verläuft die Aufnahmenut geradlinig zwischen einer ersten Stirnseite und einer zweiten Stirnseite der Magnete. Vorteilhaft bewirken die so ausgebildeten axialen Aufnahmenuten eine Verringerung der Drehmomentwelligkeit. Vorteilhaft kann hierdurch der Elektromotor vibrationsärmer betrieben werden.

Nach einer Weiterbildung der Erfindung erstreckt sich die Aufnahmenut in einem Bereich der Magnete, in dem eine auf den jeweiligen Magneten im Motorbetrieb wirkende Zentrifugalkraft am größten ist. Die Aufnahmenut kann beispielsweise im Bereich einer Längsmittelebene des Magneten angeordnet sein, wenn die in Umfangsrichtung verlaufende Kontur der äußeren Umfangsseite des Magneten bogen- oder kreisförmig verläuft.

Nach einer Weiterbildung der Erfindung sind die Magnete als Ferritmagnete ausgebildet, die weniger mit dem Fördermedium einer Pumpe reagieren, in dem der mit den Magneten versehene Elektromotor integriert ist. Das Korrosionsrisiko kann hierdurch weiter verringert werden.

Nach einer Weiterbildung der Erfindung werden die Magnete direkt mit dem Rotorkern stoffschlüssig, vorzugsweise durch Kleben verbunden. Vorteilhaft wird bei dieser Ausführungsform lediglich ein einziger Kunststoffumspritzvorgang benötigt.

Nach einer alternativen Ausführungsform der Erfindung sind die Magnete jeweils in durch Aufspritzen auf den Rotorkern bzw. Umspritzen desselben aufgebrachte Magnettaschen eingesetzt. Vorteilhaft dienen die Magnettaschen als Positionierhilfe für die Magnete während des Herstellungsprozesses.

Nach einer Weiterbildung der Erfindung ist der Rotorkern mit einer Motorwelle drehfest verbunden, wobei in einem stirnseitigen Bereich des Rotorkern ein Abdichtring angeordnet ist, mittels dessen der Rotor in einem achsnahen Bereich vor dem Eintreten von Flüssigkeit geschützt ist.

Zur Lösung der Aufgabe weist die Erfindung einen Elektromotor mit einem herkömmlichen Stator und mit einem Rotor enthaltend auf einem Rotorkern aufgebrachte Magnete mit außenseitig ausgebildeten Aufnahmenuten auf, so dass die Effektivität des Elektromotors bei gleichem Materialeinsatz erhöht werden kann.

Ausführungsbeispiele der Erfindung werden nachfolgend anhand der Zeichnungen näher erläutert.

Es zeigen:
- Figur 1: eine perspektivische Darstellung eines drehfest mit einer Welle verbundenen Rotorkerns,
- Figur 2: eine perspektivische Darstellung einer ersten Kunststoffumspritzung des Rotorkerns zur Ausbildung von Magnettaschen entsprechend einer ersten Ausführungsform eines Rotors in einem ersten Umspritzschritt,
- Figur 3: eine perspektivische Darstellung der ersten Ausführungsform der Erfindung in einem weiteren Verfahrensschritt, in dem die Magnete in die Magnettaschen gemäß Figur 2 eingesetzt sind, wobei eine anschließende Kunststoffummantelung gemäß Fig. 4 über schematisch dargestellte radial wirkende Einspritzdüsen erfolgt,
- Figur 4: eine perspektivische Darstellung der Erfindung nach der ersten Ausführungsform in einem weiteren zweiten Umspritzschritt, in dem eine Kunststoffummantelung durch Umspritzen des Rotorkerns und der Magnete vorgenommen worden ist,
- Figur 5: einen Längsschnitt durch den Rotor gemäß der ersten Ausführungsform mit in einem Stirnbereich des Rotors angeordneten Abdichtringen,
- Figur 6: eine perspektivische Darstellung des Magneten,
- Figur 7: eine perspektivische Darstellung des Rotorkerns, auf den umfangsseitig die Magnete direkt aufgeklebt sind entsprechend einer zweiten Ausführungsform der Erfindung.

Ein erfindungsgemäßer Rotor bildet zusammen mit einem nicht dargestellten Stator einen Elektromotor, der beispielsweise als Synchronmotor für Nassläuferpumpen in Haushaltsgeräten eingesetzt werden kann.

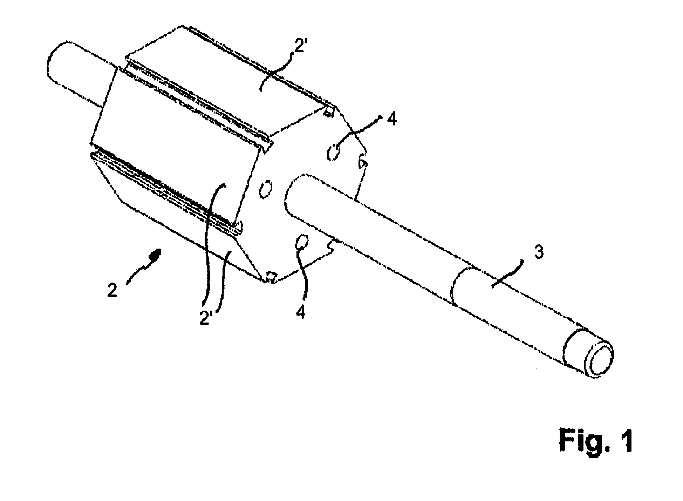

Ein Rotor 1 nach einer ersten Ausführungsform gemäß den Figuren 1 bis 6 weist einen aus einer Mehrzahl von Blechpaketen zusammengesetzten Rotorkern 2 auf, der auf einer Welle 3 aufgepresst oder aufgeschrumpft sein kann. Der Rotorkern 2 ist somit drehfest mit der Motorwelle 3 verbunden. Das Blechpaket besteht aus mehreren koaxial zueinander angeordneten Rotorblechen, die jeweils über Zentrierbohrungen 4 verfügen zur Zentrierung des Rotorkerns 2 bezüglich der Welle 3. Der Rotorkern 2 weist im vorliegenden Ausführungsbeispiel sechs in Umfangsrichtung U verteilt angeordnete Umfangsflächen 2' auf.

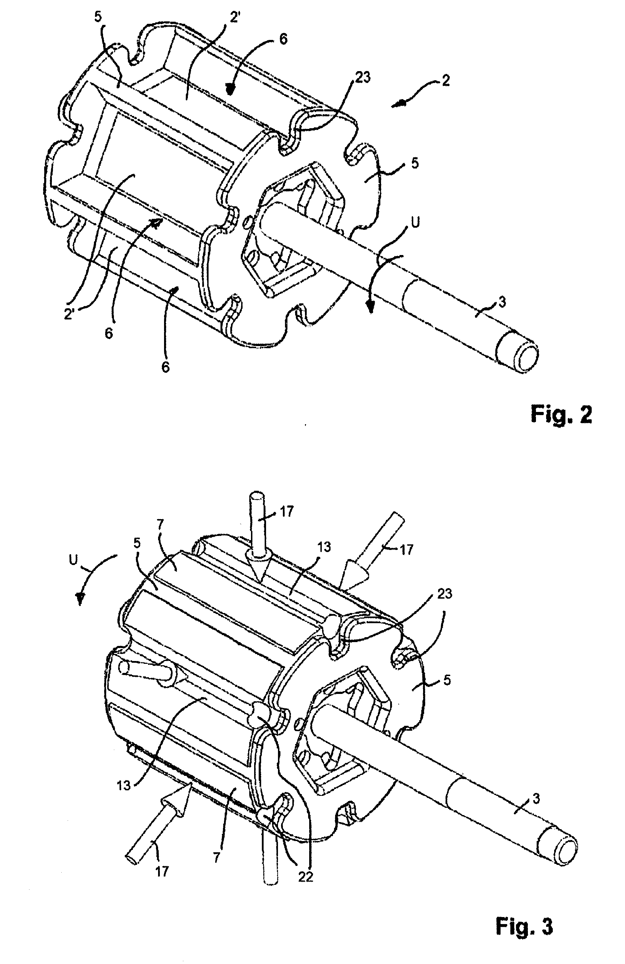

Nach der ersten Ausführungsform der Erfindung wird der Rotorkern 1 zusammen mit der Welle 3 in den Formraum eines Umspritzwerkzeugs eingesetzt, wobei der Formraum derart konfiguriert ist, dass nach Einfüllen einer thermoplastischen Kunststoffmasse in den Formraum und Erkalten desselben eine erste Kunststoffanspritzung 5 gemäß Figur 2 erfolgt. Diese erste Kunststoffanspritzung 5 ist koaxial zu der Welle 3 ausgebildet und weist in Umfangsrichtung U sechs verteilt angeordnete Magnettaschen 6 auf. In die Magnettaschen 6 werden jeweils Magnete 7 als Einzelmagnete eingesetzt und kraftschlüssig und/oder formschlüssig über entsprechende Befestigungsmittel mit der rahmenförmigen ersten Kunststoffanspritzung 5, insbesondere der jeweiligen Magnettaschen 6, verbunden. Beispielsweise können die Magnettaschen 6 jeweils Rastmittel aufweisen, so dass die Magnete 7 jeweils quasi formschlüssig vor dem Herausfallen gesichert sind. Die Kunststoffanspritzung 5 bildet eine Anzahl von in Umfangsrichtung verteilt angeordneten und jeweils zwischen benachbarten Magneten 7 erstreckende radiale Stege. Die benachbarten Magnete 7 sind somit in Umfangsrichtung beabstandet zueinander angeordnet. Die Magnete 7 sind vorzugsweise als Ferritmagnete ausgebildet. Die Magnettaschen 6 und die Magnete 7 sind konzentrisch zu den Rotoren 2 bzw. zu der Welle 3 angeordnet.

Die Magnete 7 sind jeweils langgestreckt ausgebildet und weisen zwischen einer ersten Stirnseite 8 und einer zweiten Stirnseite 9 eine ebene innere Umfangsseite 10 sowie eine im Wesentlichen bogenförmig verlaufende äußere Umfangsseite 11 auf. In Längsrichtung sind die innere Umfangsseite 10 und die äußere Umfangsseite 11 mittels ebenfalls langgestreckter gegenüberliegender Schmalseiten 12 miteinander verbunden. Die Schmalseiten 12 schließen mit der ebenen inneren Umfangsseite 10 einen stumpfen Winkel ein, so dass die Magnete 7 im Querschnitt eine in Richtung zur Welle 3 verlaufende verjüngende Kontur aufweisen. Dies erleichtert das Einsetzen der Magnete 7 in die Magnettaschen 6.

An der äußeren Umfangsseite 11 weisen die Magnete 7 jeweils eine Aufnahmenut 13 auf, die geradlinig in Längsrichtung des Magneten 7 bzw. in Axialrichtung des Rotors 1 vorzugsweise von der ersten Stirnseite 8 zu der zweiten Stirnseite 9 geradlinig verläuft. Die Aufnahmenut 13 dient zur Aufnahme eines Kunststoffes einer Kunststoffummantelung 15, die den Rotor 1 bzw. die Magnete 7 in Umfangsrichtung vollständig umgibt. Die Kunststoffummantelung 15 weist eine konstante radiale Wandstärke auf mit Ausnahme von Bereichen, in denen jeweils die Aufnahmenut 13 der Magnete 7 verläuft. Die Wandstärke der Kunststoffummantelung 15 im Bereich der Aufnahmenuten 13 ist größer als in den weiteren Bereichen der Kunststoffummantelung 15. Die Aufnahmenut 13 erstreckt sich im Bereich einer Längsmittelebene L des Magneten 7. Die Aufnahmenut 13 weist eine Nuttiefe t1 auf, die etwa einem Drittel einer Dicke d des Magneten 7 entspricht. Die Nuttiefe t1 der Aufnahmenut 13 ist somit kleiner als die halbe Dicke d des Magneten 7.

Die Längsmittelebene L bildet eine Symmetrieebene des Magneten 7. Im montierten Zustand der Magnete 7 schneidet die Längsmittelebene L eine Achse der Welle 3 ein. Die Magnete 7 sind konzentrisch zu dem Rotorkern 2 angeordnet.

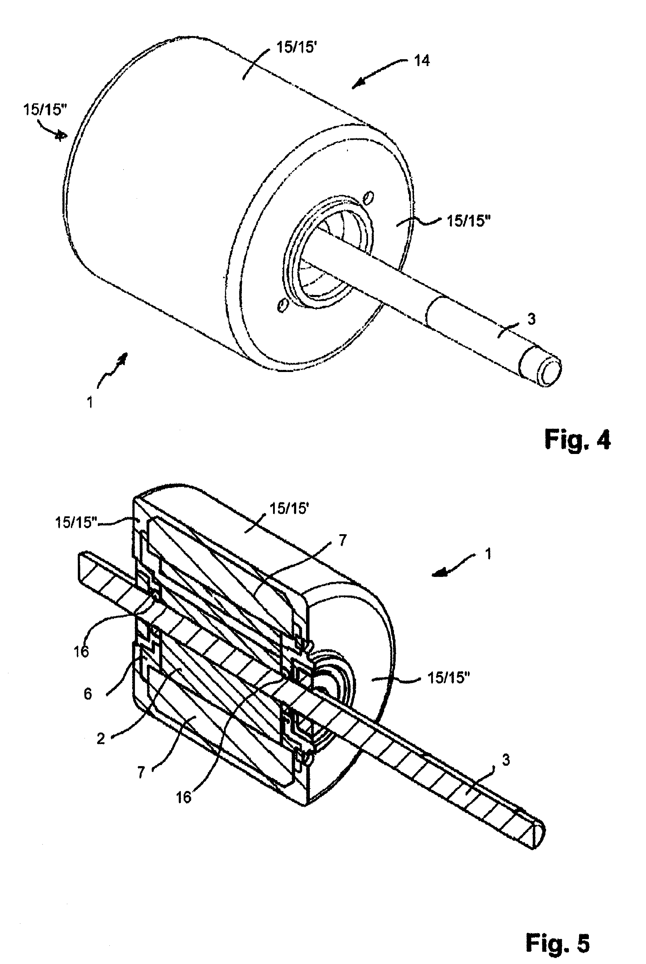

Nachdem die Magnete 7 in die Magnettaschen 6 eingesetzt worden sind, wird der so erweiterte Rotorkern 2 zusammen mit der Welle 3 in einem weiteren Verfahrensschritt in den Formraum eines Umspritzwerkzeuges gelegt, so dass eine zweite Kunststoffanspritzung 14 gemäß Figur 4 erfolgen kann. Die zweite Kunststoffanspritzung 14 bildet die Kunststoffummantelung 15, die einen axialen Mantelabschnitt 15' aufweist zur umfangsseitigen Überdeckung der Magnete 7 und des Rotorkerns 2 einerseits und die einen radialen Mantelabschnitt 15" aufweist zur stirnseitigen Überdeckung der Magnete 7 bzw. des Rotorkerns 2 andererseits. Der Rotorkern 2 ist zusammen mit den Magneten 7 nun annähernd von der Kunststoffummantelung 15 umschlossen. Ein Umfang des Rotors 1 bzw. ein Umfang der Mehrzahl von Magneten 7 ist vollständig von der Kunststoffummantelung 15' umgeben bzw. umschlossen. Zur achsnahen Abdichtung ist im stirnseitigen Bereich des Rotorkerns 2 jeweils ein Abdichtring 16 (O-Ring) an einer Ringnut der Welle 3 befestigt, siehe Figur 5. Die Ringnut weist eine Breite auf, die geringer ist als eine Schnurstärke des Abdichtrings 16, so dass sich eine radiale Verpressung einstellt.

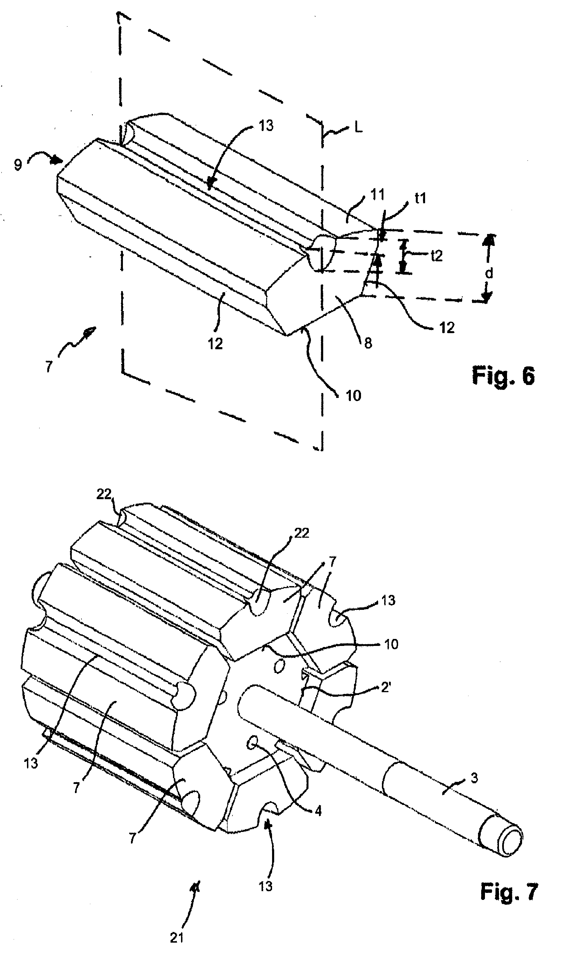

Die Aufnahmenut 13 der Magnete 7 weist jeweils stirnseitig eine Anfasung 22 auf, mittels derer die in den Formraum des Umspritzwerkzeugs einschießende Kunststoffmasse einfacher verteilt werden kann. Ferner wird eine Kerbwirkung der an den Stirnseiten 8, 9 angeordneten Kanten der Magnete 7 auf die zweite Kunststoffanspritzung 14 infolge von Zentrifugalkräften beim Motorbetrieb verhindert. In Figur 6 ist eine Tiefe t2 der Anfasung 22 dargestellt, die größer ist als die Nuttiefe t1 der Aufnahmenut 13.

Wie aus insbesondere den Figuren 2 und 3 ersichtlich ist, ist der Formraum des Umspritzwerkzeugs derart ausgebildet, dass die Kunststoffanspritzung 5 in Verlängerung der Aufnahmenut 13 eine radiale Aussparung 23 aufweist. Die Kunststoffanspritzung 5 weist an den Stirnseiten des Rotorkerns 2 somit kranzförmige Abschnitte auf, die umfangssseitig der Kontur der Magnete 7 folgen.

Nach einer zweiten Ausführungsform der Erfindung ist ein Rotor 21 vorgesehen, der sich von dem Rotor 1 nach der ersten Ausführungsform dadurch unterscheidet, dass die Magnete 7 mit ihrer ebenen inneren Umfangsseite 10 direkt an den Umfangsflächen 2' des Rotorkerns 2 stoffschlüssig befestigt sind. Beispielsweise können die Magnete 7 durch Kleben an dem Rotorkern 2 befestigt sein.

Gleiche Bauteile bzw. Bauteilfunktionen der Ausführungsbeispiele sind mit den gleichen Bezugsziffern versehen.

Somit erfolgt zur Herstellung des Rotors 21 lediglich eine einzige Kunststoffanspritzung 14, so dass der Rotor 21 die gleiche äußere Form aufweist wie der Rotor 1.

In Figur 3 ist schematisch mittels der Pfeile 17 dargestellt, dass die Kunststoffmasse in radialer Richtung im Bereich der Aufnahmenuten 13 in den Formraum eingebracht wird, so dass der Kunststoffmassenstrom mittels der Aufnahmenut 13 in Längsrichtung umgelenkt und geführt werden kann, bis der Freiraum des Formwerkzeugs vollständig ausgefüllt ist.

Es versteht sich, dass die Magnete 7 für die beiden Rotoren 1 und 21 die gleiche Formgebung aufweisen.

## Patentansprüche

1. Rotor (1) für einen Elektromotor, insbesondere für Synchronmotoren von Nassläuferpumpen, mit einem Rotorkern (2), an dem umfangsseitig eine Anzahl von Magneten (7) angebracht sind, wobei der Rotorkern (2) und die Magnete (7) von einer Kunststoffummantelung (15) umgeben sind, **dadurch gekennzeichnet, dass** die Magnete (7) jeweils auf einer dem Rotorkern (2) abgewandten äußeren Umfangsseite (11) eine Aufnahmenut (13) aufweisen.

2. Rotor nach Anspruch 1, **dadurch gekennzeichnet, dass** die Aufnahmenut (13) geradlinig verläuft von einer ersten Stirnseite (8) zu einer zweiten Stirnseite (9) des Magneten (7).

3. Rotor nach Anspruch 1 oder 2, **dadurch gekennzeichnet, dass** die Aufnahmenut (13) in einem Bereich des Magneten (7) angeordnet ist, in dem eine auf den Magneten (7) im Motorbetrieb wirkende Zentrifugalkraft am größten ist.

4. Rotor nach einem der Ansprüche 1 bis 3, **dadurch gekennzeichnet, dass** die Aufnahmenut (13) im Bereich einer Längsmittelebene (L) des Magneten (7) in axialer Richtung verlaufend angeordnet ist.

5. Rotor nach einem der Ansprüche 1 bis 4, **dadurch gekennzeichnet, dass** der Magnet (7) als ein Ferritmagnet ausgebildet ist.

6. Rotor nach einem der Ansprüche 1 bis 5, **dadurch gekennzeichnet, dass** die Kunststoffummantelung (15) einen axialen Mantelabschnitt (15') zur umfangsseitigen Überdeckung der Magnete (7) und des Rotorkerns (2) einerseits und/oder einen radialen Mantelabschnitt (15") zur stirnseitigen Überdeckung der Magnete (7) und/oder des Rotorkerns (2) andererseits umfasst.

7. Rotor nach einem der Ansprüche 1 bis 6, **dadurch gekennzeichnet, dass** die Magnete (7) direkt mit dem Rotorkern (2) stoffschlüssig verbunden sind.

8. Rotor nach einem der Ansprüche 1 bis 6, **dadurch gekennzeichnet, dass** die Magnete (7) jeweils in durch Aufspritzen auf den Rotorkern (2) aufgebrachte Magnettaschen (6) gelagert sind.

9. Rotor nach Anspruch 8, **dadurch gekennzeichnet, dass** die Magnete (7) über kraftschlüssig und/oder formschlüssig wirkende Befestigungsmittel in den jeweiligen Magneftaschen (6) gehaltert sind.

10. Rotor nach einem der Ansprüche 1 bis 9, **dadurch gekennzeichnet, dass** die Kunststoffummantelung (15) und/oder die Magnettaschen (6) aus einem thermoplastischen Kunststoffmaterial bestehen.

11. Rotor nach einem der Ansprüche 1 bis 10, **dadurch gekennzeichnet, dass** der Rotorkern (2) mit einer Welle (3) drehfest verbunden ist und dass in einem stirnseitigen Bereich des Rotorkerns (2) auf der Welle (3) ein Abdichtring (16) befestigt ist.

12. Elektromotor mit einem Stator und mit einem Rotor nach einem der Ansprüche 1 bis 11.
